# EUROPÄISCHE PATENTSCHRIFT

(11) **EP 0 483 308 B1**
(45) Veröffentlichungstag und Bekanntmachung des Hinweises auf die Patenterteilung: **27.09.1995**
(21) Anmeldenummer: 91907874.1
(22) Anmeldetag: 25.04.1991
(51) Int. Cl.: F16M 5/00

(54) **TRÄGERPLATTE UND VERFAHREN ZU DEREN HERSTELLUNG**
SUPPORT PLATE AND PROCESS FOR MANUFACTURING IT
PLAQUE DE SUPPORT ET PROCEDE POUR SA FABRICATION

(30) Priorität: 16.05.1990 DE 4015693
(43) Veröffentlichungstag der Anmeldung: 06.05.1992
(73) Patentinhaber: ROBERT BOSCH GMBH, 70442 Stuttgart (DE)
(72) Erfinder: DREXEL, Peter, D-7049 Steinenbronn (DE); ARLETH, Werner, D-7300 Esslingen/Neckar (DE); LANGE, Horst-Dieter, D-7066 Baltmannsweiler 2 (DE)
(86) Internationale Anmeldenummer: DE9100346
(87) Internationale Veröffentlichungsnummer: WO9118238

(56) Entgegenhaltungen:
- CH-A- 356 317
- CH-A- 638 880
- DE-U- 8 903 535
- GB-A- 957 742
- US-A- 3 334 850
- US-A- 4 670 208

## Beschreibung

Die Erfindung geht aus von einer Trägerplatte nach der Gattung des Hauptanspruchs. Derartige Trägerplatten werden eingesetzt zum Aufbau von Fertigungs-, Montage- und/oder Prüfeinrichtungen.

Herkömmliche Trägerplatten bestehen aus Stahlplatten, bei denen durch Brennschneiden die Außenkonturen und größere Durchbrüche erzeugt werden. Um die erforderliche Ebenheit und Oberflächengüte zu erzielen, werden die Stahlplattenoberflächen beidseitig spanend bearbeitet. Für Befestigungsmaßnahmen werden Gewinde- und Durchgangsbohrungen, den Erfordernissen entsprechend, individuell eingebracht. Die Stahlplatte liegt direkt auf einem Tischgestell auf, wobei die Stahlplatte je nach Einsatz zwecks Stabilität eine gewisse Mindestdicke aufweisen muß. Die tragende Funktion wird von der Stahlplatte selbst ausgeübt. Zum Oberflächenschutz und aus dekorativen Gründen ist eine Oberflächenveredlung erforderlich. Die Nachteile dieser Trägerplatten bestehen darin, daß sie kostenintensiv herstellbar sind, daß eine schnelle Verfügbarkeit aufgrund des hohen Arbeitsaufwands ausgeschlossen ist und daß, um ein hohes Schwingungsdämpfungsvermögen zu erzielen, ein hoher Materialeinsatz erforderlich ist. Damit verfügen derartige Trägerplatten über ein hohes Gewicht.

Aus dem Gebrauchsmuster DE-U-89 03 535 ist bereits eine Trägerplatte bekannt, bei der ein aus Blech gebildeter Rahmen mit Mineralguß ausgegossen ist. Der Rahmen besitzt angeschweißte Verankerungselemente, die in den Mineralguß eingreifen. Beim Ausgießen des Rahmens mit Mineralguß wird der Rahmen mit einem Stützgerüst umgeben, welches nach dem Aushärten des Mineralgusses entfernt wird.

Aus der US-A-3 334 850 ist eine Maschinengrundplatte aus einem mit Beton umgossenen Gestell bekannt. Das Gestell bildet hierbei nicht die äußere Form der Maschinengrundplatte, sondern es wird in eine Form eingesetzt, die dann mit Beton ausgegossen wird. Die Maschinengrundplatte dient als Fundament für schwere Maschinen.

### Vorteile der Erfindung

Die erfindungsgemäße Trägerplatte mit den kennzeichnenden Merkmalen des Hauptanspruchs hat demgegenüber den Vorteil, daß sie kostengünstiger herstellbar und schnell verfügbar ist sowie über ein acht- bis zwölfmal höheres Schwingungsdämpfungsvermögen verfügt als eine vergleichbare Stahlplatte. Weiterhin weist die erfindungsgemäße Trägerplatte eine hohe Verzugsfreiheit auf, wobei eine Ebenheit von < 0,5 mm auf 2 m Länge nachgewiesen werden konnte.

Durch die in den Unteransprüchen aufgeführten Maßnahmen sind vorteilhafte Weiterbildungen und Verbesserungen der im Hauptanspruch angegebenen Trägerplatte möglich. Besonders vorteilhaft ist, daß das Rahmengestell und die Streben einen Profilquerschnitt mit hinterschnittenen Nuten aufweisen. Der Profilquerschnitt bewirkt einerseits, daß sich der Mineralguß in den hinterschnittenen Nuten verankert und andererseits, daß die hinterschnittenen Nuten des Profils Befestigungselemente aufnehmen können, die entlang der hinterschnittenen Nuten eine variable Position einnehmen können.

### Zeichnung

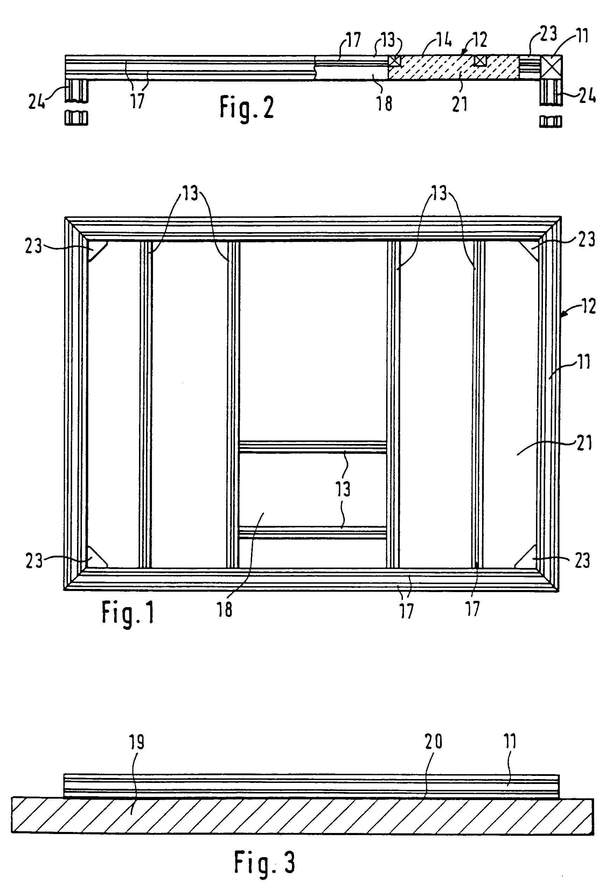

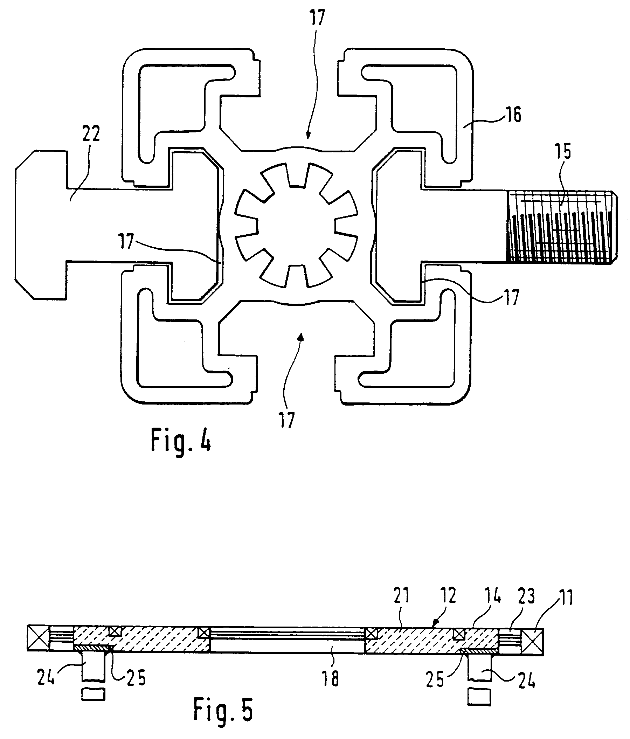

Ein Ausführungsbeispiel der Erfindung ist in der Zeichnung dargestellt und in der nachfolgenden Beschreibung näher erläutert. Es zeigen Figur 1 eine Draufsicht der erfindungsgemäßen Trägerplatte, Figur 2 eine Seitenansicht mit einer Teilschnittdarstellung der erfindungsgemäßen Trägerplatte in einer Ausführungsform als Tisch, Figur 4 eine Ausführungsform des Profilquerschnittes des Rahmengestells 11 und der Streben 13, Figur 3 zeigt eine Anordnung zur Herstellung der Trägerplatte und Figur 5 eine Seitenansicht in Schnittdarstellung der erfindungsgemäßen Trägerplatte in einer weiteren Ausführungsform als Tisch.

### Beschreibung des Ausführungsbeispiels

Der Grundkörper der Trägerplatte besteht aus einem Rahmengestell 11, das mittels in den Ecken angebrachter Winkel 23 zusammengefügt ist, und aus mehreren innerhalb des Rahmengestells 11 angebrachten Streben 13. Der Innenraum des Rahmengestells 11 wird mit einem Mineralguß 21 ausgefüllt, so daß Rahmengestell 11, Streben 13 und Mineralguß 21 eine massive Platte 12 bilden. Unter der Bezeichnung Mineralguß, auch Polymerbeton oder Reaktionsharzbeton genannt, versteht man ein reaktionsharzgebundenes Material, welches mit feinkörnigen und/oder grobkörnigen, zumeist quarzitischen Füllstoffen hochgradig angereichert ist. Als Bindemittel werden Reaktionsharze (Epoxid, Polyester, Vinylester, Polymethylmethacrylat (PMMA) usw.) eingesetzt, die sowohl durch Polyaddition als auch durch Polymerisation aushärten. Der Bindemittelanteil beträgt je nach Viskosität, Füllstoff, Bindemittelart und Bauteilgeometrie/ -dimension zwischen 7 und 20 %. Derartige Werkstoffe sind grundsätzlich bekannt.

Je nach Einsatzzweck erfordert die Trägerplatte Durchbrüche 18. Im vorliegenden Ausführungsbeispiel ist ein Durchbruch 18 vorgesehen, der von vier Streben 13 (Figuren 1 und 2) begrenzt ist. Die Streben 13 sind innerhalb des Rahmengestells 11 derart angeordnet, daß ihre Oberfläche bündig mit der Oberseite 14 der Platte 12 abschließt.

Das Rahmengestell 11 und die Streben 13 sind aus Profilmaterial ausgeführt. Das Profilmaterial der Streben 13 weist einen Profilquerschnitt 16 gemäß Figur 4 auf, wobei entlang jeder Seite als T-Nuten ausgeführte hinterschnittene Nuten 17 verlaufen. Der Profilquerschnitt des Rahmengestells 11 ist aus Stabilitätsgründen im vorliegendem Ausführungsbeispiel stärker ausgebildet als der Profilquerschnitt 16 der Streben 13 und besitzt an jeder Seite zwei verlaufende hinterschnittene Nuten 17, die die gleicher Gestalt wie im Profilquerschnitt 16 aufweisen.

In die hinterschnittenen Nuten 17 kann der Mineralguß 21 einfließen und findet somit eine feste Verankerung. Zur Unterstützung der Verankerung können in die hinterschnittenen Nuten 17 Verankerungselemente 22 ähnlich den Befestigungselementen 15 eingebracht werden, die dann tiefer in den Mineralguß eingreifen. Die an der Oberseite 14 der Platte 12 verlaufenden hinterschnittenen Nuten 17 die ebenfalls als T-Nuten ausgeführt sind, dienen zur Aufnahme der Befestigungselemente 15. Als Befestigungselemente 15 eignen sich im vorliegenden Fall als Normalien verfügbare Hammerkopfschrauben oder Standardschrauben und Hammermuttern. Diese Befestigungselemente lassen sich entlang der T-Nuten 17 in jede beliebige Position bringen. Damit läßt sich ein und dieselbe Trägerplatte für verschiedene Aufbauten von Fertigungs, Montage- und Prüfeinrichtungen verwenden. Neben dem in Figur 4 angegebenen Profilquerschnitt 16 ist die Verwendung anderer Profilmaterialien möglich, deren Profilquerschnitte hinterschnittene Nuten 17 aufweisen.

Eine Ausführungsform der Trägerplatte besteht darin, daß die Platte 12 die Platte eines Tisches bildet, wobei die Füße 24 des Tisches am Rahmengestell 11 mittels üblicher Verschraubungen angebracht sind (Figur 2), oder gemäß Figur 5 Befestigungen 25 in den Mineralguß 21 eingegossen sind, an denen die Füße 24 befestigt werden. Im vorliegenden Ausführungsbeispiel werden die Befestigungen 25 jeweils von Platten gebildet, an die die Füße 24 geschweißt sind. Es sind aber auch übliche Verschraubungen denkbar.

Zur Herstellung der Trägerplatte wird das Rahmengestell 11 unter Zwischenlage eines Trennmittels auf eine Formunterlage 19 aufgelegt, so daß das Rahmengestell 11 die Verschalung der Gießform bildet. Die Aufspannung des Rahmengestells 11 auf der Formunterlage 19 erfolgt mit Hilfe von nicht in der Zeichnung dargestellten über der Formunterlage 19 verstellbar angebrachten Stempeln. Dadurch ist gewährleistet, daß auf der Formunterlage 19 beliebige Rahmenformate bis zur vorgesehenen maximalen Größe mit einem beliebigen Strebennetz aufgespannt werden können, ohne daß die dekorative Mineralgußoberfläche durch Abdrücke verunziert wird, die von abgedeckten Durchbrüchen herrühren, die für unterschiedliche Ausführungen erforderlich wären.

Ein zweites Ausführungsbeispiel zur Herstellung der Trägerplatte besteht darin, daß eine Formunterlage 19 mit einem für alle Ausführungen vorgesehen Durchbruchbild eingesetzt wird, auf die eine mit dem jeweiligen Durchbruchbild der gewünschten Ausführung versehene Zwischenunterlage 20 gelegt wird. Die Verwendung der Zwischenunterlage 20 ermöglicht die Befestigung des Rahmengestells 11 und der Streben 13 mittels einfacher Elemente wie z.B. Hammerkopfschrauben, die von der Unterseite der Formunterlage 19 in die T-Nuten des Profilquerschnittes 16 durchgesteckt werden können. Diese Ausführungsform hat den besonderen Vorteil, daß die eigentliche Formunterlage 19 nicht mit dem Mineralguß 21 in Berührung kommt und dadurch keinerlei Verschleiß erleidet. Dagegen kann die relativ schwach ausführbare Zwischenunterlage 20 jederzeit bei Verschleiß oder Beschädigung ausgewechselt werden.

Prinzipiell ist der Einsatz einer Zwischenunterlage 20 auch für die erste Ausführungsvariante zur Herstellung der Trägerplatte vorteilhaft.

Nachdem das Rahmengestell 11, wie in den beiden Ausführungsbeispielen für die Herstellung der Trägerplatte beschrieben, auf die Formunterlage 19 oder auf die Zwischenunterlage 20 aufgespannt ist, wird in die vom Rahmengestell 11 und den Streben 13 gebildete Gießform der Mineralguß gegeben. Zum Erreichen einer hohen Packungsdichte und der damit verbundenen Eigenschaftsverbesserungen wird zur Verdichtung während und nach dem Einfüllvorgang die gesamte Anordnung gerüttelt. Das Aushärten der Mineralgußmasse erfolgt innerhalb von 12 Stunden. Die Endfestigkeit wird nach drei Tagen erreicht. Eine zusätzliche Alterung ist nicht erforderlich.

Gewünschte Durchbrüche 20 in der Trägerplatte werden dabei, wie bereits beschrieben, durch entsprechend angeordnete Streben 13 begrenzt, wobei beim Ausgießen mit Mineralguß dieser Bereich ausgespart wird.

Eine andere Möglichkeit zum Einbringen von Durchbrüchen 18, kann durch das Einlegen von Kernen innerhalb des Rahmengestells 11 realisiert werden.

## Patentansprüche

1. Trägerplatte zum Aufbau von Fertigungs-, Montage- und/oder Prüfeinrichtungen, bestehend aus einem mit Mineralguß ausgegossenem Rahmengestell, dadurch gekennzeichnet, daß das Rahmengestell (11) aus Profilelementen gebildet ist, daß die Profilelemente einen Profilquerschnitt (16) aufweisen, der hinterschnittene Nuten besitzt, die als Mittel zur Aufnahme von Befestigungselementen für die aufzubauenden Einrichtungen und/oder als Mittel zur Verankerung des Mineralgusses dienen, wobei zur Verankerung der Mineralguß in die hinterschnittenen Nuten (17) einzufließen vermag, so daß das Rahmengestell (11) und der Mineralguß (21) eine massive Platte (12) bilden.

2. Trägerplatte nach Anspruch 1, dadurch gekennzeichnet, daß innerhalb des Rahmengestells (11) Streben (13) derart angebracht sind, daß ihre Oberfläche bündig mit der Oberseite (14) der Platte (12) abschließt.

3. Trägerplatte nach Anspruch 1, dadurch gekennzeichnet, daß zur Verankerung des Mineralgusses zusätzliche Verankerungselemente (22) ähnlich den Befestigungselementen (15) in die hinterschnittenen Nuten (17) einsetzbar sind.

4. Trägerplatte nach Anspruch 1 oder 3, dadurch gekennzeichnet, daß die Befestigungselemente (15) als Hammerkopfschrauben und/oder Hammermuttern in Verbindung mit Standardschrauben ausgebildet sind.

5. Trägerplatte nach Anspruch 1, dadurch gekennzeichnet, daß die hinterschnittenen Nuten (17) als T-Nuten ausgeführt sind.

6. Trägerplatte nach Anspruch 1, dadurch gekennzeichnet, daß die Platte (12) einen oder mehrere Durchbrüche (18) aufweist.

7. Trägerplatte nach Anspruch 6, dadurch gekennzeichnet, daß die Streben (13) gleichzeitig die Begrenzung für einen oder mehrere Durchbrüche (18) bilden.

8. Trägerplatte nach einem der vorhergehenden Ansprüche, dadurch gekennzeichnet, daß die Platte (12) die Platte eines Tisches bildet, wobei die Füße (24) des Tisches am Rahmengestell (11) oder an im Mineralguß (21) eingelassenen Befestigungen angesetzt sind.

## Claims

1. Supporting plate for setting up fabrication, assembly and/or test equipment, comprising a framework which is filled with a mineral casting, characterized in that the framework (11) is formed from profile elements, in that the profile elements have a profile cross-section (16) which has undercut grooves, which serve as means for receiving fastening elements for the equipment to be set up, and/or as means for anchorage of the mineral casting, the mineral casting being able to flow into the undercut grooves (17) for the purpose of anchorage in such a way that the framework (11) and the mineral casting (21) form a solid plate (12).

2. Supporting plate according to Claim 1, characterised in that struts (13) are fitted within the framework (11) in such a way that their surface terminates flush with the upper side (14) of the plate (12).

3. Supporting plate according to Claim 1, characterised in that, for the purpose of anchorage of the mineral casting, additional anchoring elements (22), similar to the fastening elements (15), can be inserted into the undercut grooves (17).

4. Supporting plate according to Claim 1 or 3, characterised in that the fastening elements (15) are designed as hammer head screws and/or hammer nuts in connection with standard screws.

5. Supporting plate according to Claim 1, characterised in that the undercut grooves (17) are made as T-grooves.

6. Supporting plate according to Claim 1, characterised in that the plate (12) has one or more openings (18).

7. Supporting plate according to Claim 6, characterised in that the struts (13) at the same time form the boundary for one or more openings (18).

8. Supporting plate according to one of the preceding claims, characterised in that the plate (12) forms the top of a table, the feet (24) of the table being attached to the framework (11) or to fastenings inset in the mineral casting (21).

## Revendications

1. Plaque de support pour recevoir des installations de fabrication, de montage et/ou de contrôle, composée d'un châssis dans lequel on a coulé une matière minérale, caractérisée en ce que le châssis (11) est formé d'éléments profilés qui ont une section (16) possédant des rainures à contre-dépouille servant de moyens pour recevoir des éléments de fixation destinés aux installations à monter, et/ou de moyens d'ancrage de la matière minérale coulée, la matière minérale pouvant couler dans les rainures à contre-dépouille (17) pour s'ancrer, afin que le châssis (11) et la matière minérale coulée (21) forment une plaque massive (12).

2. Plaque de support selon la revendication 1, caractérisée par des entretoises (13) prévues à l'intérieur du châssis (11) de façon que leur surface supérieure soit à fleur de la face supérieure (14) de la plaque (12).

3. Plaque de support selon la revendication 1, caractérisée par des éléments d'ancrage complémentaires (22) analogues aux éléments de fixation (13), qui sont logés dans les rainures à contre-dépouille (17) pour l'ancrage de la matière minérale coulée.

4. Plaque de support selon la revendication 1 ou 2, caractérisée en ce que les éléments de fixation (15) sont constitués par des vis à tête marteau et/ou des écrous marteaux en liaison avec des vis standard.

5. Plaque de support selon la revendication 1, caractérisée en ce que les rainures à contre-dépouille (17) dont des rainures à section en forme de T.

6. Plaque de support selon la revendication 1, caractérisée en ce que la plaque (12) comporte un ou plusieurs passages (18).

7. Plaque de support selon la revendication 6, caractérisée en ce que les entretoises (13) forment en même temps la limite d'un ou plusieurs passages (18).

8. Plaque de support selon l'une des revendications précédentes, caractérisée en ce que la plaque (12) forme le plateau d'une table dont les pieds (24) sont reliés à des moyens de fixation du châssis (11) ou intégrés dans la matière minérale coulée (21).
